# EUROPEAN PATENT SPECIFICATION

(11) **EP 2 526 278 B1**
(45) Date of publication and mention of the grant of the patent: **17.04.2019**
(21) Application number: 11734929.0
(22) Date of filing: 19.01.2011
(51) Int. Cl.: F02C 6/04, F01K 21/04, F02C 6/18, F02C 3/30, F01K 13/02, F01K 23/10, F01K 23/14

(54) **METHOD OF OPERATING A GAS TURBINE COMBINED HEAT AND POWER PLANT AND GAS TURBINE COMBINED HEAT AND POWER PLANT**
BETRIEBSVERFAHREN FÜR EIN KOMBINATIONS-GASTURBINENKRAFTWERK ZUR STROM- UND WÄRMEERZEUGUNG SOWIE KOMBINATIONS-GASTURBINENKRAFTWERK ZUR STROM- UND WÄRMEERZEUGUNG
PROCÉDÉ D'EXPLOITATION D'UNE CENTRALE DE COGÉNÉRATION À TURBINE À GAZ ET CENTRALE DE COGÉNÉRATION À TURBINE À GAZ

(30) Priority: 19.01.2010 SE 1000043
(43) Date of publication of application: 28.11.2012
(73) Proprietor: Phoenix Biopower AB, 114 28 Stockholm (SE)
(72) Inventor: HANSSON, Hans-Erik, SE-612 02 Finspång (SE)
(74) Representative: Ehrner & Delmar Patentbyrå AB
(86) International application number: PCT/SE2011/000005
(87) International publication number: WO 2011/090416

(56) References cited:
- WO-A1-2004/106718
- WO-A1-2004/106718
- WO-A2-2005/100754
- US-A- 5 386 685
- US-A- 5 771 678
- US-A- 6 089 024
- US-A1- 2003 070 415

## Description

### FIELD OF THE INVENTION

The invention concerns a method of operating a gas turbine combined heat and power plant including a compressor assembly and a turbine assembly, useful work being extracted by at least one device being included in the plant, wherein combustion gases are produced by a combustion device, upstream of the turbine assembly, and wherein water and/or steam is heated through heat exchanging with a hot gas stream downstream of the turbine assembly and/or in a compressor flow path and water and/or steam is injected into said gas flow stream upstream of and/or in the combustion device in such amounts that at least 80% of oxygen contents in the air in the gas flow stream is consumed through combustion in the combustion device and wherein a flue gas condenser is operative in a flue gas stream downstream of the turbine assembly in order to extract heat therefrom for heating heat carrying fluid used in a heating device. The invention also concerns a gas turbine combined heat and power plant.

### BACKGROUND OF THE INVENTION

WO 2004/106718 (Euroturbine AB) describes a method of operating a gas turbine power plant with two gas turbine groups. The main purpose of the invention described in that document is to provide high efficiency by introducing water and/or steam into the process flow, thereby allowing a close to stoichiometric combustion process. Water is recovered downstream by a flue gas condenser and is re-introduced at various places upstream in the process flow.

US 2003/0070415 A1 discloses an air humidifier for adding moisture to a working medium of a gas turbine for humidification, and gas turbine electric power generation equipment for driving the gas turbine.

### AIM AND MOST IMPORTANT FEATURES OF THE INVENTION

The invention according to the background art works well and it is an aim of the present invention to provide a further development of means for performing a method of operating a combined heat and power plant, wherein the emphasis is to enhance properties for supplying heat used in a heating device, preferably of a district heating net.

These aims are achieved according to the invention in a method as indicated above through the characterizing features of the independent claims.

It is achievable to reach as high temperature levels as at least close to 80°C in the heat supply conduit for the heat carrying fluid through the use of a flue gas condenser/heat recovery device. This is achieved in that a high dew point is reached because of great amounts of water being present in the flue gases, whereby condensation is performed at high temperature levels. Thus, condensation is performed from 80°C down to about 50°C, which is a typical return temperature in a district heating net, a major part of the waste heat from the power plant will in this way become available for district heating purposes.

Hereby it is thus possible to reach such high temperature levels in the heat carrying fluid that it thereby can be advantageously used for external heating purposes such as district heating of buildings in operating conditions that prevail during a great part of the year in most parts of the world. For colder periods, when extra heat requirements prevail, the invention provides additional solutions for supply temperature topping.

It is important to realise that the invention concerns a method in connection with a close to stoichiometric process wherein water contents in the process gas is as great as is practically possible. Air access is held at the lowest level necessary in order to achieve efficient combustion in the combustor. Hereby unnecessary work for compressing air containing oxygen not used for combustion can be held to a minimum. A part of the combustion heat may also be used for transforming water into steam.

In previously known heating plants for district heating, up to now, it has been necessary to fire great amounts of fuels in order to reach heat demands and sufficient temperature levels, leading to high energy consumption and high energy costs. This drawback is not necessary with the method according to the invention. By this method, also, heat inherent in steam used in the process including water vapour produced by the combustion of the fuel itself will be recovered.

According to a first inventive aspect of the invention the flue gas stream downstream of the turbine assembly and upstream of the flue gas condenser is supplemented with flue gases from an additional combustor in order to arrange for enhancement of the temperature level for the heat carrying fluid, wherein combustion oxygen for the additional combustor comes from ambient air oxygen and/or oxygen from an inlet air humidifier and/or residue oxygen in the flue gases downstream of the turbine assembly. Advantageously, this additional combustor also enhance the conditions for producing both combustor steam and top up temperature levels for heat production. Conditions close to stoichiometry can be maintained resulting in efficient power production and maintained high flue gas dew temperature.

Further, according to the first inventive aspect of the invention, an additional condenser is arranged for extracting water and heat from the flue gas stream downstream of the flue gas condenser and the inlet air humidifier is arranged for injecting extracted heat and water into intake air to the compressor assembly. Hereby, heat having such a temperature level that it is below return temperature of a district net can also preferably be extracted from the flue gas stream downstream of the flue gas condenser and used for heating and humidifying intake air to the compressor assembly. Thus heat is extracted by further condensation of the gas and recycled into the process by means of an intake air humidifier.

According to a second inventive aspect of the invention, heat is extracted by a heat exchange device being placed in a compressor gas stream upstream of the combustion device and used for heating said fluid which makes it possible to reach higher supply temperature levels in the heat carrying fluid in an advantageous way. It is also advantageous to be able to use this principle for adapting cooling of the compressor gas stream for the purpose of adjusting to compressor and combustor characteristics.

Through this aspect, enhanced temperature performance and possibility of reaching higher supply temperatures are obtained. Heat exchange, for this purpose, with the compressor gas stream upstream of the combustion device is particularly advantageous in that the temperature in that stream is high, typically as high as 500°C, which makes is possible in an effective way for getting access to such high temperatures that are desired in respect of various conditions.

This is achieved, according to this aspect, without declined plant performance and does not reduce the total efficiency.

When, in particular according to the second inventive aspect, the heat is extracted by said heat exchange device having at least one heat exchange unit being arranged in the compressor gas stream respectively between at least two compressor units the advantage of an intercooler solution is obtained in that the gas temperature in the second (and possibly third etc.) compressor unit (or compressor step) is reduced leading to reduced compressor work requirement. It is thus possible to have plural heat exchange units, each one being arranged between two compressor units. One further advantage is that, according to the invention, cooling is effected by means of water whereby cooling is possible to lower levels than would have been possible with otherwise preferably used steam generator.

Preferably combustion gas being fed to the turbine assembly has a pressure of 50 - 300 bar.

It is also preferred that the water and/or steam being injected into said gas flow stream upstream of and/or in the combustion device is water and/or steam produced by being heated through heat exchanging with said hot gas stream downstream of the turbine assembly and/or in said compressor flow path since this is most efficient for the process.

It is preferred that available heat extracted by a further heat exchange device being placed in said flue gas stream between the turbine assembly and the flue gas condenser and used for heating said fluid since this makes it possible to reach even higher supply temperature levels in the heat carrying fluid.

Said hot gas stream is advantageously the flue gas stream downstream of the turbine assembly.

Said hot gas stream is as an alternative the gas flow stream upstream of the combustion device.

To further enhance the temperature level the heat carrying fluid, steam or hot water can be extracted from a heat exchanger being placed downstream of the turbine assembly being originally adapted for production of steam for introduction into the combustor can according to this aspect be transferred to the heat exchanger for further heating of the heat carrying fluid. This aspect reduces the efficiency for the production of electricity but can be advantageous for reaching high supply temperatures in the heat carrying fluid.

However, instead of possibly lacking steam for introduction into the combustor because of heat allocation for heating heat carrying fluid, more water can be injected therein for production of steam inside the combustor, thus still maintaining stoichiometric conditions in the process.

The most important function of the condensers is to utilize steam vaporization heat of the steam content in the flue gases.

It is preferred that the proportional amounts of water and steam relative to each other injected into said gas flow stream upstream of and/or in the combustion device are controlled through control means with maintained close to stoichiometric conditions in order to regulate the amount of heat being available for being extracted from said flue gas stream downstream of the turbine assembly for heating said heat carrying fluid and subsequently the impact on supply temperature.

Increased extraction of heat and subsequent higher supply temperature is obtained by routing an increased cooling flow through the further heat exchange device being placed in the flue gas stream between the turbine assembly and the flue gas condenser and transfer extracted heat for heating the heat carrying fluid and vice versa. This allows an incremental switch between steam production and hot water production in said further heat exchange device. Allocating heat for heating heat carrying fluid generally speaking leads to reduced steam production which in turn is remedied by the injection of more water (which can be for example water from the flue gas condenser) into the combustor so as to maintain the stoichiometric conditions that are crucial for the invention. Hereby fast response to occurring requirements is made possible maintaining excellent efficiency and control. This aspect does not result in any loss of energy, basically only in advantages in respect of regulation.

In particular it is preferred that oxygen contents in said flue gas stream downstream of the turbine assembly is detected through detection means and the amount of water and/or steam injected into said gas flow stream upstream of and/or in the combustion device is controlled through said control means as a response to detected oxygen contents value. A typical practical target oxygen contents value in said flue gases is between about 0,4 - 4% by weight of flue gases, preferably between about 0,6 - 2%, more preferred 0,6 - 1,5% using 1,0% as most preferred value. Detection can be accomplished in various ways, for example by using a so called Lambda sond interfering in the flue gas stream, and water and/or steam injection can be regulated by means of a CPU which controls the associated water/steam flows.

All measures described above, and in particular when they are combined, result in that higher degree of process efficiency can be obtained.

All measures and features described above can be combined with the first as well as with the second inventive aspect of the invention.

Corresponding advantages are obtained in respect of the claims directed to a gas turbine combined heat and power plant.

### BRIEF DESCRIPTION OF DRAWINGS

The invention will now be described in greater detail at the background of embodiments and with reference to the annexed drawings, wherein:
Fig. 1 diagrammatically illustrates a combined heat and power plant according to the invention,
Fig. 2 illustrates typical heat demand in a district heating net,
Fig. 3 illustrates temperature requirements in a heat carrying fluid in a district heating net,
Fig. 4 diagrammatically illustrates a combined heat and power plant according to a second embodiment of the invention, and
Fig. 5 diagrammatically illustrates a combined heat and power plant according to a third embodiment of the invention.

### DESCRIPTION OF THE EMBODIMENTS

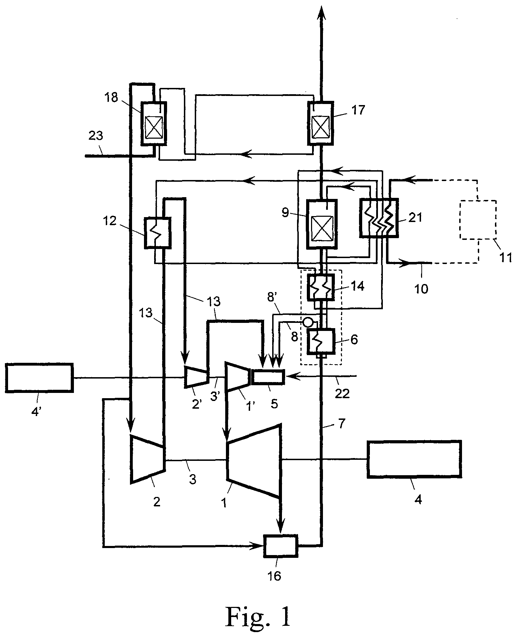

In Fig. 1 there is shown diagrammatically a combined heat and power plant, wherein a first gas turbine group includes, on the one hand a turbine assembly 1 and on the other hand a compressor assembly 2 which are mechanically interconnected over a shaft 3. The shaft 3 is also used for driving a device 4 for extracting useful work from the plant, such as an electric generator.

A second gas turbine group includes on the one hand a turbine assembly 1' and on the other hand a compressor assembly 2' which are mechanically interconnected over a shaft 3'. In this embodiment there is thus provided twin gas turbine groups corresponding essentially to what is illustrated in WO 2004/106718 A1.

In a gas flow stream 13 there is arranged downstream of the compressor assembly 2' and upstream the turbine assembly 1', a combustion device 5 for producing combustion gases/flue gases for driving the turbine assembly 1' and the turbine assembly 1. In a flue gas stream 7 downstream of the turbine assembly 1, a heat exchanger 6 is arranged for heating steam which is introduced upstream of or in the combustion device 5 over a conduit 8. The arrow 22 indicates fuel supply.

A further heat exchange device 14 for the production of hot water is placed in said flue gas stream 7 between the turbine assembly 1 and the flue gas condenser 9 and is also used for heating said heat carrying fluid by being connected to said heat exchanger 21 by use of surplus heat available in the flue gas stream upstream of the condenser. The heat exchange device 14 can preferably be integrated with the heat exchanger 6 which i.a. makes it more easily capable of making incremental changes between steam and hot water production.

Under maintained stoichiometric conditions, output of heat from the integrated heat exchanger unit 6, 14 to the heat exchanger 21 can be controlled by varying the production of steam and/or hot water to be injected into said gas flow stream upstream of and/or in the combustion device.

8' indicates a conduit for leading hot water from the heat exchange device 14 to the combustor 5.

Further downstream in the flue gas stream 7, there is arranged a flue gas condenser 9, which extracts heat from the flue gases, while water content in the flue gases is extracted by condensation, for heating, in a heat exchanger 21, heat carrying fluid inside a conduit 10 leading to a heating device 11 for example for a district heating net.

Water condensed by the flue gas condenser 9 is heated and re-entered into the cycle in or upstream of the combustion device 5.

A heat exchange device 12 is arranged in a compressor gas stream 13 between the compressor assemblies 2 and 2' for cooling said stream after being compressed by the first compressor assembly 2. Heat extracted by the heat exchange device 12 is entered into the heat exchanger 21 for further heating of said heat carrying fluid for topping of supply temperature.

The heat exchanger 12 can preferably be arranged such that production of steam and hot water can be easily switched in respect of each other. When requirement for heat in a district heating net or the like so allows, typically is not high, more heat extracted by the heat exchanger 12 can be used for heating water and/or steam for injection into the gas flow stream upstream of or in the combustion device.

An additional combustor 16 is positioned for producing hot flue gases to be introduced into the flue gas stream 7 downstream of the turbine assembly 1 and upstream of the flue gas condenser 9. Combustion oxygen for the additional combustor can be supplied from ambient air oxygen and/or from a humidifier 18 and/or residue oxygen in the flue gases downstream of the turbine assembly (see below).

This additional combustor 16 is used for topping of temperature in the flue gas stream 7, in particular in conditions were extra high heat carrying fluid temperatures are necessary such as, for example, in respect of district heating nets during very cold weather conditions.

Downstream of the flue gas condenser 9 there is arranged an additional condenser 17 for further condensation of the flue gases which are thus further dehumidified, before they are being emitted from the plant. Water and heat extracted by the additional condenser 17 is preferably introduced into an inlet airstream 23 through an inlet air humidifier 18.

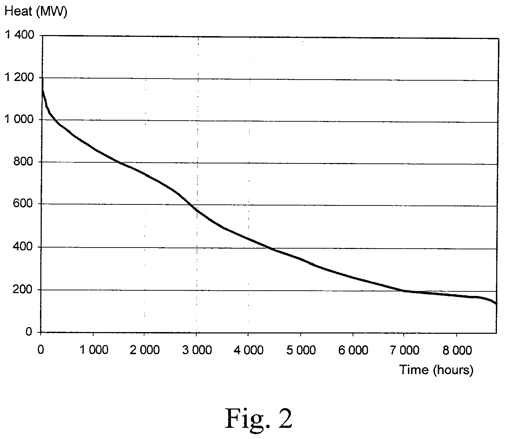

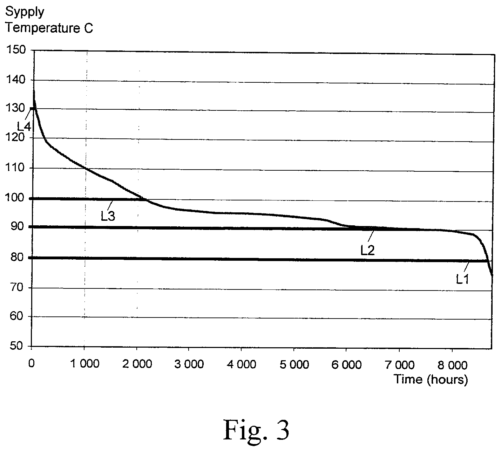

Figs 2 and 3 illustrate, as an example, diagrams related to a district heating net. In Fig. 2 there is illustrated a typical one year heat demand distribution structure, whereby can be seen that for a relatively very short time period there is a high heat demand, whereas for the major part of the year the demands are considerably lower.

In Fig. 3 there is shown a diagram illustrating supply line temperature requirements for heat carrying fluid in the conduit 10 as a function of number of hours during a year. As the diagram illustrates, for most part of the year, a supply line temperature of around 90°C (or slightly lower) is required whereas extremely high supply line temperatures up to about 130°C are required only during a short period each year.

Typically, the major parts of the required heat for a district net, such as the one having the requirements in Fig. 3, are covered by recovering heat from a flue gas condenser which typically, because of high water contents in the flue gases reaches as high as about 80°C corresponding to a first level L1.

Typically also, a second level L2 temperature of 90°C is relatively easily reached by the heat exchange device 12 positioned between the first and the second compressor units in the compressor assembly.

A third level L3, up to about 100°C, is reached by further heat exchange upstream of the flue gas condenser. This level L3 is also preferably supported by extracting heat from the steam generator/heat exchanger 6 and from the heat exchange device 14 which can be achieved by introducing steam produced and leading heated excess water to the heat exchanger 21. With the term "heated excess water" is here intended water in excess of what is necessary for the production of hot water and steam to be supplied upstream or in the combustion device 5. Supply of heated excess water thus means reduced steam production for supply upstream of or in the combustion device, which then is compensated by extra water injection in the combustion device for maintaining close to stoichiometric conditions.

At a fourth level L4, the topping heat is typically reached by use of the additional combustor, which is positioned downstream of the turbine assembly 1. It should be noted that also at various operational cases associated with lower temperature levels, heat production by the additional combustor can be beneficial for the process.

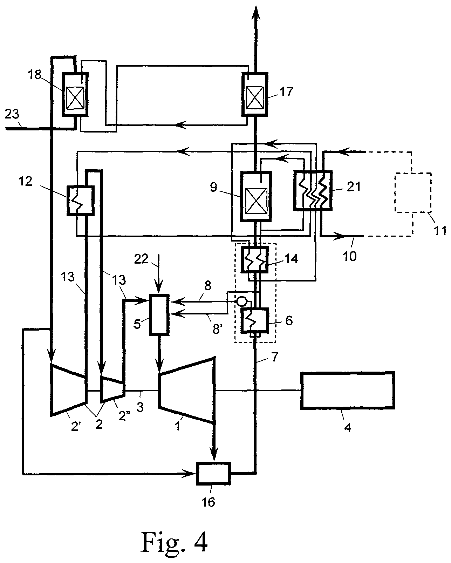

In Fig. 4 there is shown a second embodiment of the invention having a turbine assembly 1 being connected to a compressor assembly 2 with two compressor units 2' and 2" as well as to a device 4 for extracting work, such as an electric generator. The basic features of the elements in respect of external heat delivery are, however, the same as is illustrated in Fig. 1 and discussed above. The remaining reference numerals generally correspond to the ones appearing in Fig 1.

Further, the flue gases from the combustion device are in this embodiment lead to the turbine assembly 1.

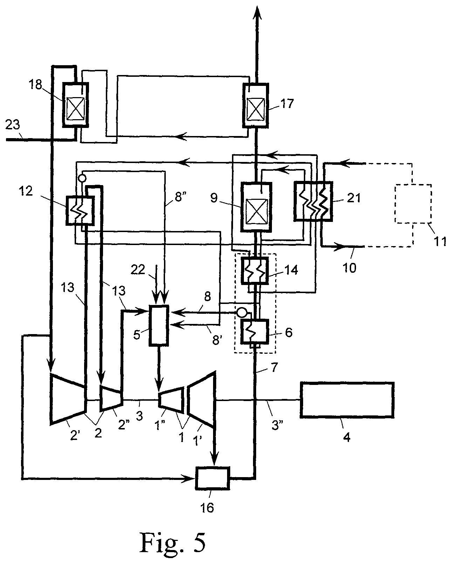

In Fig. 5 there is shown a third embodiment of the invention having a turbine unit 1" being connected to a compressor assembly 2 with two compressor units 2' and 2". A second turbine unit 1' is connected to a device 4 for extracting work, such as an electric generator. The basic features of the elements in respect of external heat delivery are much the same as is discussed above except for the coupling of the heat exchanger 12 being arranged in the compressor gas stream 13 between the compressor units 2' and 2" for cooling said stream after being compressed by the first compressor unit 2'. Heat extracted by the heat exchange device 12 is entered into the heat exchanger 21 for further heating of said heat carrying fluid.

As is indicated above, when requirement for heat in a district heating net or the like so allows, typically is not high, heat extracted from the heat exchanger 12 can be used for heating water and/or steam for injection over the conduit 8" into the combustion device 5.

Further, the flue gases from the combustion device 5 are in this embodiment lead to a turbine unit 1" being a first part of the turbine assembly 1. A turbine unit 1' being a second part of the turbine assembly 1 is coaxial therewith and is rotationally free from the turbine unit 1". The turbine unit 1' is over a shaft 3" connected to a device 4 for extracting work, such as an electric generator. The remaining reference numerals generally correspond to the ones appearing in Fig 4.

As an explanation of the advantages of the present invention, it can be noted that background art Combined Heat and Power plants (CHP:s) have a total efficiency (including production of electricity and heat) of up to about 90% in the best case calculated on the fuel's low heating value.

The invention, however, provides for the possibility of far better total efficiency in that it gives the possibility to utilize the energy in the flue gases being in the form of the contained steam's vaporisation heat. For that reason a plant having the combined measures described above exhibits a total efficiency of up to about 115% calculated on the fuel's low heating value which can be compared to a typical total efficiency of 80 - 90% for a method according to the background art. Because of its principle, the efficiency of a plant according to the invention is also not as sensitive to high water contents fuels, such as bio fuels, as the previously known CHP, since the energy to vaporize the water in the fuel can be recovered in the condenser or condensers.

The invention can be modified within the scope of the patent claims in that i.a. the flue gas condenser can be supplemented with the various heat exchange devices discussed above according to need and conditions. In another modification, heat exchanger 6 being arranged for heating water and/or steam and the heat exchange device 14 are integrated functional parts of one single device. As a complementary measure to heating water and/or steam through heat exchanging with the hot gas stream downstream of the turbine assembly 1, heated water and/or steam for introduction into the process gas stream is advantageously produced in the compressor flow path 13.

## Claims

1. Method of operating a gas turbine combined heat and power plant, including a compressor assembly (2) and a turbine assembly (1), useful work being extracted by at least one device (4) being included in the plant, wherein flue gases are produced by a combustion device (5), upstream of the turbine assembly (1), wherein water and/or steam is heated through heat exchanging with a hot gas stream downstream of the turbine assembly (1) and/or in a compressor flow path (13), and water and/or steam is injected into said gas flow stream upstream of and/or in the combustion device (5) in such amounts that at least 80% of oxygen contents in the air in the stream is consumed through combustion in the combustion device (5), and wherein a heat carrying fluid used in a heating device (11) is heated from heat extracted by a flue gas condenser (9) being operative in a flue gas stream (7) downstream of the turbine assembly (1), **characterized in**
- **that** the flue gas stream downstream of the turbine assembly (1) is supplemented with flue gases from an additional combustor (16), wherein combustion oxygen for the additional combustor comes from an inlet air humidifier (18), and
- **that** water and heat is extracted from the flue gas stream (7) downstream of the flue gas condenser (9) by an additional condenser (17) whereby the flue gas stream (7) is further dehumidified and water and heat extracted therefrom is injected into intake air to the compressor assembly (2) by means of the inlet air humidifier (18).

2. The method according to claim 1, wherein combustion gas being fed to the turbine assembly (1) has a pressure of 50 - 300 bar.

3. The method according to claim 1 or 2, wherein water and/or steam being injected into said gas flow stream upstream of and/or in the combustion device (5) is water and/or steam produced by being heated through heat exchanging with said hot gas stream downstream of the turbine assembly (1) and/or in said compressor flow path (13).

4. The method according to claim 1, 2 or 3, wherein heat is also extracted by a heat exchange device (12) being placed in a compressor gas stream upstream of the combustion device (5) and used for heating said heat carrying fluid.

5. The method according to any one of the claims 1 - 4, wherein heat is also extracted by heat exchange (14,6) in said flue gas stream between the turbine assembly (1) and the flue gas condenser (9) and used for heating said heat carrying fluid.

6. The method according any one of the claims 1 - 5, wherein said hot gas stream is one or more of: the flue gas stream downstream of the turbine assembly (1), the gas flow stream upstream of the combustion device (5).

7. The method according any one of the claims 1 - 6, wherein combustion oxygen for the additional combustor is also utilized residue oxygen in the flue gases downstream of the turbine assembly (1).

8. The method according to any one of the claims 1 - 7, wherein proportional amounts of water and steam, relative to each other, injected into said gas flow stream upstream of and/or in the combustion device (5) are controlled with maintained close to stoichiometric conditions in order to regulate flue gas energy contents available for being extracted from said flue gas stream (7) downstream of the turbine assembly (1) for heating said heat carrying fluid.

9. The method according to claim 8, wherein oxygen contents in said flue gas stream (7) downstream of the turbine assembly (1) is detected and the amount of water and/or steam injected into said gas flow stream upstream of and/or in the combustion device (5) is controlled as a response to detected oxygen contents value.

10. Gas turbine combined heat and power plant, including a compressor assembly (2) and a turbine assembly (1), wherein at least one device (4) for extracting useful work is included in the plant, and wherein a combustion device (5) is arranged to produce flue gases upstream of the turbine assembly (1), wherein a heat exchanger (6, 12, 14) is arranged for heating water and/or steam through heat exchanging with a hot gas stream downstream of the turbine assembly (1) and/or in a compressor flow path (13), and means are arranged for injecting water and/or steam into said gas flow stream upstream of and/or in the combustion device in such amounts that at least 80% of oxygen contents in the air in the stream is consumed through combustion in the combustion device, and wherein a flue gas condenser (9) is operative in a flue gas stream downstream of the turbine assembly (1) in order to extract heat therefrom for heating heat carrying fluid used in a heating device (11), **characterized in**
- **that** an additional combustor (16) is placed in the flue gas stream downstream of the turbine assembly (1) for supplementing said flue gas stream with further flue gases, wherein conduits are arranged for combustion oxygen for the additional combustor coming from an inlet air humidifier, and
- **that** an additional condenser (17) is arranged for extracting water and heat from the flue gas stream (7) downstream of the flue gas condenser (9) and the inlet air humidifier (18) is arranged for injecting extracted heat and water into intake air to the compressor assembly (2).

11. The plant according to claim 10, wherein it is arranged such that water and/or steam being injected into said gas flow stream upstream of and/or in the combustion device (5) is water and/or steam produced by being heated through heat exchanging with said hot gas stream downstream of the turbine assembly (1) and/or in said compressor flow path (13).

12. The plant according to claim 10 or 11, wherein a heat exchange device (12) is placed for extracting heat from a compressor gas stream upstream of the combustion device (5) and for heating said heat carrying fluid.

13. The plant according to any one of the claims 10 - 12, wherein a further heat exchange device (14,6) is placed for extracting heat from said flue gas stream between the turbine assembly (1) and the flue gas condenser (9) and for heating said heat carrying fluid.

14. The plant according to any one of the claims 10 - 13, wherein it is arranged that proportional amounts of water and steam, relative to each other, injected into said gas flow stream upstream of and/or in the combustion device (5) are controlled through control means with maintained close to stoichiometric conditions in order to regulate flue gas energy contents available for being extracted from said flue gas stream (7) downstream of the turbine assembly (1) for heating said heat carrying fluid.

15. The plant according to claim 14, wherein oxygen contents in said flue gas stream (7) downstream of the turbine assembly (1) is detected through detection means and the amount of water and/or steam injected into said gas flow stream upstream of and/or in the combustion device (5) is controlled through said control means as a response to detected oxygen contents value.

## Patentansprüche

1. Betriebsverfahren für ein Kombinationsgasturbinenkraftwerk zur Strom- und Wärmeerzeugung, einschließlich einer Verdichteranordnung (2) und einer Turbinenanordnung (1), wobei Nutzarbeit durch zumindest eine Vorrichtung (4) gewonnen wird, die in der Anlage enthalten ist, wobei Rauchgase durch eine Verbrennungsvorrichtung (5) stromaufwärts der Turbinenanordnung (1) produziert werden, wobei Wasser und/oder Dampf durch Wärmeaustausch mit einem Heißgasstrom stromabwärts der Turbinenanordnung (1) und/oder in einem Verdichterströmungspfad (13) erwärmt wird und Wasser und/oder Dampf in die Gasströmung stromaufwärts von und/oder in der Verbrennungsvorrichtung (5) in solchen Mengen eingespritzt wird, dass zumindest 80 % des Sauerstoffgehalts in der Luft in der Strömung durch Verbrennung in der Verbrennungsvorrichtung (5) verbraucht werden, und wobei ein in einer Heizvorrichtung (11) verwendetes Wärmeträgerfluid von Wärme erwärmt wird, die durch einen Rauchgaskondensator (9) gewonnen wird, der in einer Rauchgasströmung (7) stromabwärts der Turbinenanordnung (1) operabel ist, **dadurch gekennzeichnet,**
- **dass** die Rauchgasströmung stromabwärts der Turbinenanordnung (1) durch Rauchgase von einer zusätzlichen Brennkammer (16) ergänzt wird, wobei Verbrennungssauerstoff für die zusätzliche Brennkammer von einem Einlassluftbefeuchter (18) kommt, und
- **dass** Wasser und Wärme aus der Rauchgasströmung (7) stromabwärts des Rauchgaskondensators (9) durch einen zusätzlichen Kondensator (17) gewonnen werden, wobei die Rauchgasströmung (7) weiter entfeuchtet wird und Wasser und Wärme, das bzw. die daraus gewonnen wird, mittels des Einlassluftbefeuchters (18) in Ansaugluft zu der Verdichteranordnung (2) eingespritzt wird.

2. Verfahren nach Anspruch 1, wobei Verbrennungsgas, das der Turbinenanordnung (1) zugeführt wird, einen Druck von 50-300 bar aufweist.

3. Verfahren nach Anspruch 1 oder 2, wobei Wasser und/oder Dampf, das bzw. der in die Gasströmung stromaufwärts von und/oder in der Verbrennungsvorrichtung (5) eingespritzt wird, Wasser und/oder Dampf ist, das bzw. der dadurch produziert wird, dass es bzw. er durch Wärmeaustausch mit dem Heißgasstrom stromabwärts der Turbinenanordnung (1) und/oder in dem Verdichterströmungspfad (13) erwärmt wird.

4. Verfahren nach Anspruch 1, 2 oder 3, wobei Wärme auch durch eine Wärmeaustauschvorrichtung (12) gewonnen wird, die in einer Verdichtergasströmung stromaufwärts der Verbrennungsvorrichtung (5) platziert ist und zum Erwärmen des Wärmeträgerfluids verwendet wird.

5. Verfahren nach einem der Ansprüche 1-4, wobei Wärme auch durch Wärmeaustausch (14, 6) in der Rauchgasströmung zwischen der Turbinenanordnung (1) und dem Rauchgaskondensator (9) gewonnen und zum Erwärmen des Wärmeträgerfluids verwendet wird.

6. Verfahren nach einem der Ansprüche 1-5, wobei der Heißgasstrom eines oder mehreres von Folgendem ist: die Rauchgasströmung stromabwärts der Turbinenanordnung (1), die Gasströmung stromaufwärts der Verbrennungsvorrichtung (5).

7. Verfahren nach einem der Ansprüche 1-6, wobei als Verbrennungssauerstoff für die zusätzliche Brennkammer auch Restsauerstoff in den Rauchgasen stromabwärts der Turbinenanordnung (1) genutzt wird.

8. Verfahren nach einem der Ansprüche 1-7, wobei relativ zueinander proportionale Mengen von Wasser und Dampf, das bzw. der in die Gasströmung stromaufwärts von und/oder in der Verbrennungsvorrichtung (5) eingespritzt wird, mit beibehaltenen nahezu stöchiometrischen Bedingungen gesteuert werden, um den Rauchgasenergiegehalt, der verfügbar ist, um aus der Rauchgasströmung (7) stromabwärts der Turbinenanordnung (1) zum Erwärmen des Wärmeträgerfluids gewonnen zu werden, zu regulieren.

9. Verfahren nach Anspruch 8, wobei der Sauerstoffgehalt in der Rauchgasströmung (7) stromabwärts der Turbinenanordnung (1) erfasst wird und die Menge an Wasser und/oder Dampf, das bzw. der in die Gasströmung stromaufwärts von und/oder in der Verbrennungsvorrichtung (5) eingespritzt wird, als eine Reaktion auf einen erfassten Sauerstoffgehaltswert gesteuert wird.

10. Kombinationsgasturbinenkraftwerk zur Strom- und Wärmeerzeugung, einschließlich einer Verdichteranordnung (2) und einer Turbinenanordnung (1), wobei zumindest eine Vorrichtung (4) zum Gewinnen von Nutzarbeit in der Anlage enthalten ist und wobei eine Verbrennungsvorrichtung (5) angeordnet ist, um Rauchgase stromaufwärts der Turbinenanordnung (1) zu produzieren, wobei ein Wärmeaustauscher (6, 12, 14) zum Erwärmen von Wasser und/oder Dampf durch Wärmeaustausch mit einem Heißgasstrom stromabwärts der Turbinenanordnung (1) und/oder in einem Verdichterströmungspfad (13) angeordnet ist und ein Mittel angeordnet ist, um Wasser und/oder Dampf in die Gasströmung stromaufwärts von und/oder in der Verbrennungsvorrichtung in solchen Mengen zu injizieren, dass zumindest 80 % des Sauerstoffgehalts in der Luft in der Strömung durch Verbrennung in der Verbrennungsvorrichtung verbraucht werden, und wobei ein Rauchgaskondensator (9) in einer Rauchgasströmung stromabwärts der Turbinenanordnung (1) operabel ist, um Wärme daraus zum Erwärmen des Wärmeträgerfluids zu gewinnen, das in einer Heizvorrichtung (11) verwendet wird, **dadurch gekennzeichnet,**
- **dass** eine zusätzliche Brennkammer (16) in der Rauchgasströmung stromabwärts der Turbinenanordnung (1) platziert ist, um die Rauchgasströmung mit weiteren Rauchgasen zu ergänzen, wobei Leitungen für Verbrennungssauerstoff für die zusätzliche Brennkammer, der von einem Einlassluftbefeuchter kommt, angeordnet sind, und
- **dass** ein zusätzlicher Kondensator (17) angeordnet ist, um Wasser und Wärme aus der Rauchgasströmung (7) stromabwärts des Rauchgaskondensators (9) zu gewinnen, und der Einlassluftbefeuchter (18) angeordnet ist, um gewonnene Wärme und Wasser in Ansaugluft zu der Verdichteranordnung (2) zu injizieren.

11. Anlage nach Anspruch 10, wobei diese derart angeordnet ist, dass Wasser und/oder Dampf, das bzw. der in die Gasströmung stromaufwärts von und/oder in der Verbrennungsvorrichtung (5) eingespritzt wird, Wasser und/oder Dampf ist, das bzw. der dadurch produziert wird, dass es bzw. er durch Wärmeaustausch mit dem Heißgasstrom stromabwärts der Turbinenanordnung (1) und/oder in dem Verdichterströmungspfad (13) erwärmt wird.

12. Anlage nach Anspruch 10 oder 11, wobei eine Wärmeaustauschvorrichtung (12) platziert ist, um Wärme aus einer Verdichtergasströmung stromaufwärts der Verbrennungsvorrichtung (5) zu gewinnen und um das Wärmeträgerfluid zu erwärmen.

13. Anlage nach einem der Ansprüche 10-12, wobei eine weitere Wärmeaustauschvorrichtung (14, 6) platziert ist, um Wärme aus der Rauchgasströmung zwischen der Turbinenanordnung (1) und dem Rauchgaskondensator (9) zu gewinnen und um das Wärmeträgerfluid zu erwärmen.

14. Anlage nach einem der Ansprüche 10-13, wobei diese derart angeordnet ist, dass relativ zueinander proportionale Mengen von Wasser und Dampf, das bzw. der in die Gasströmung stromaufwärts von und/oder in der Verbrennungsvorrichtung (5) eingespritzt wird, durch ein Steuermittel mit beibehaltenen nahezu stöchiometrischen Bedingungen gesteuert werden, um den Rauchgasenergiegehalt, der verfügbar ist, um aus der Rauchgasströmung (7) stromabwärts der Turbinenanordnung (1) zum Erwärmen des Wärmeträgerfluids gewonnen zu werden, zu regulieren.

15. Anlage nach Anspruch 14, wobei der Sauerstoffgehalt in der Rauchgasströmung (7) stromabwärts der Turbinenanordnung (1) durch ein Erfassungsmittel erfasst wird und die Menge an Wasser und/oder Dampf, das bzw. der in die Gasströmung stromaufwärts von und/oder in der Verbrennungsvorrichtung (5) eingespritzt wird, als eine Reaktion auf einen erfassten Sauerstoffgehaltswert durch ein Steuermittel gesteuert wird.

## Revendications

1. Procédé de fonctionnement d'une centrale électrocalogène à turbine à gaz, comprenant un ensemble compresseur (2) et un ensemble turbine (1), un travail utile étant extrait par au moins un dispositif (4) qui est inclus dans la centrale, dans lequel des gaz de carneau sont produits par un dispositif de combustion (5), en amont de l'ensemble turbine (1), dans lequel de l'eau et/ou de la vapeur sont chauffées au moyen d'un échange de chaleur avec un flux de gaz chaud en aval de l'ensemble turbine (1) et/ou dans un trajet d'écoulement de compresseur (13) et de l'eau et/ou de la vapeur sont injectées dans ledit flux d'écoulement de gaz en amont du dispositif de combustion (5) et/ou dans ce dernier dans des quantités telles qu'au moins 80 % de la teneur en oxygène dans l'air dans le flux sont consommés par combustion dans le dispositif de combustion (5) et dans lequel un fluide caloporteur utilisé dans un dispositif de chauffage (11) est chauffé à partir de la chaleur extraite par un condenseur à gaz de carneau (9) qui est fonctionnel dans un flux de gaz de carneau (7) en aval de l'ensemble turbine (1), **caractérisé en ce**
- **que** le flux de gaz de carneau en aval de l'ensemble turbine (1) est complété par des gaz de carneau provenant d'une chambre de combustion supplémentaire (16), dans lequel l'oxygène de combustion pour la chambre de combustion supplémentaire provient d'un humidificateur d'air aspiré (18) et
- **que** de l'eau et de la chaleur sont extraites du flux de gaz de carneau (7) en aval du condenseur à gaz de carneau (9) au moyen d'un condenseur supplémentaire (17), grâce à quoi le flux de gaz de carneau (7) est davantage déshumidifié et de l'eau et de la chaleur extraites de ce dernier sont injectées dans l'air aspiré dans l'ensemble compresseur (2) au moyen de l'humidificateur d'air aspiré (18).

2. Procédé selon la revendication 1, dans lequel le gaz de combustion qui est transmis à l'ensemble turbine (1) présente une pression comprise entre 50 et 300 bars.

3. Procédé selon la revendication 1 ou 2, dans lequel de l'eau et/ou de la vapeur qui sont injectées dans ledit flux d'écoulement de gaz en amont du dispositif de combustion (5) et/ou dans ce dernier, soient de l'eau et/ou de la vapeur produites en étant chauffées par un échange de chaleur avec ledit flux de gaz chaud en aval de l'ensemble turbine (1) et/ou dans ledit trajet d'écoulement de compresseur (13).

4. Procédé selon la revendication 1, 2 ou 3, dans lequel de la chaleur est également extraite par un dispositif d'échange de chaleur (12) qui est placé dans un flux de gaz de compression en amont du dispositif de combustion (5) et utilisée pour chauffer ledit fluide caloporteur.

5. Procédé selon l'une quelconque des revendications 1 à 4, dans lequel de la chaleur est également extraite par échange de chaleur (14, 6) dans ledit flux de gaz de carneau entre l'ensemble turbine (1) et le condenseur à gaz de carneau (9) et utilisée pour chauffer ledit fluide caloporteur.

6. Procédé selon l'une quelconque des revendications 1 à 5, dans lequel ledit flux de gaz chaud est : le flux de gaz de carneau en aval de l'ensemble turbine (1) et/ou le flux d'écoulement de gaz en amont du dispositif de combustion (5).

7. Procédé selon l'une quelconque des revendications 1 à 6, dans lequel de l'oxygène de combustion pour la chambre de combustion supplémentaire est également utilisé comme oxygène résiduel dans les gaz de carneau en aval de l'ensemble turbine (1).

8. Procédé selon l'une quelconque des revendications 1 à 7, dans lequel des quantités proportionnelles d'eau et de vapeur, l'une par rapport à l'autre, injectées dans ledit flux d'écoulement de gaz en amont du dispositif de combustion (5) et/ou dans ce dernier sont commandées en étant maintenues proches de conditions stoechiométriques afin de réguler la teneur en énergie de gaz de carneau disponible pour être extraite dudit flux de gaz de carneau (7) en aval de l'ensemble turbine (1) pour chauffer ledit fluide caloporteur.

9. Procédé selon la revendication 8, dans lequel une teneur en oxygène dans ledit flux de gaz de carneau (7) en aval de l'ensemble turbine (1) est détectée et la quantité d'eau et/ou de vapeur injectée dans ledit flux d'écoulement de gaz en amont du dispositif de combustion (5) et/ou dans ce dernier est commandée en réponse à une valeur de teneur en oxygène détectée.

10. Centrale électrocalogène à turbine à gaz, comprenant un ensemble compresseur (2) et un ensemble turbine (1), dans laquelle au moins un dispositif (4) pour extraire un travail utile est inclus dans la centrale, et dans laquelle un dispositif de combustion (5) est conçu pour produire des gaz de carneau en amont de l'ensemble turbine (1), dans laquelle un échangeur de chaleur (6, 12, 14) est conçu pour chauffer de l'eau et/ou de la vapeur au moyen d'un échange de chaleur avec un flux de gaz chaud en aval de l'ensemble turbine (1) et/ou dans un trajet d'écoulement de compresseur (13) et des moyens sont conçus pour injecter de l'eau et/ou de la vapeur dans ledit flux d'écoulement de gaz en amont du dispositif de combustion et/ou dans ce dernier dans des quantités telles qu'au moins 80 % de la teneur en oxygène dans l'air dans le flux sont consommés par combustion dans le dispositif de combustion et dans laquelle un condenseur à gaz de carneau (9) est fonctionnel dans un flux de gaz de carneau en aval de l'ensemble turbine (1) afin d'extraire de la chaleur de ce dernier pour chauffer un fluide caloporteur utilisé dans un dispositif de chauffage (11), **caractérisée en ce**
- **qu'**une chambre de combustion supplémentaire (16) est placée dans le flux de gaz de carneau en aval de l'ensemble turbine (1) pour compléter ledit flux de gaz de carneau par d'autres gaz de carneau, dans laquelle des conduites sont conçues pour l'oxygène de combustion pour la chambre de combustion supplémentaire provenant d'un humidificateur d'air aspiré et
- **qu'**un condenseur supplémentaire (17) est conçu pour extraire de l'eau et de la chaleur du flux de gaz de carneau (7) en aval du condenseur à gaz de carneau (9) et l'humidificateur d'air aspiré (18) est conçu pour injecter de la chaleur et de l'eau extraites dans l'air aspiré dans l'ensemble compresseur (2).

11. Centrale selon la revendication 10, dans laquelle elle est conçue de telle sorte que de l'eau et/ou de la vapeur qui sont injectées dans ledit flux d'écoulement de gaz en amont du dispositif de combustion (5) et/ou dans ce dernier, soient de l'eau et/ou de la vapeur produites en étant chauffées par un échange de chaleur avec ledit flux de gaz chaud en aval de l'ensemble turbine (1) et/ou dans ledit trajet d'écoulement de compresseur (13) .

12. Centrale selon la revendication 10 ou 11, dans laquelle un dispositif d'échange de chaleur (12) est placé pour extraire de la chaleur d'un flux de gaz de compression en amont du dispositif de combustion (5) et pour chauffer ledit fluide caloporteur.

13. Centrale selon l'une quelconque des revendications 10 à 12, dans laquelle un dispositif d'échange de chaleur supplémentaire (14, 6) est placé pour extraire de la chaleur dudit flux de gaz de carneau entre l'ensemble turbine (1) et le condenseur à gaz de carneau (9) et pour chauffer ledit fluide caloporteur.

14. Centrale selon l'une quelconque des revendications 10 à 13, dans laquelle elle est conçue de sorte que des quantités proportionnelles d'eau et de vapeur, l'une par rapport à l'autre, injectées dans ledit flux d'écoulement de gaz en amont du dispositif de combustion (5) et/ou dans ce dernier soient commandées par des moyens de commande en étant maintenues proches de conditions stoechiométriques afin de réguler la teneur en énergie de gaz de carneau disponible pour être extraite dudit flux de gaz de carneau (7) en aval de l'ensemble turbine (1) pour chauffer ledit fluide caloporteur.

15. Centrale selon la revendication 14, dans laquelle une teneur en oxygène dans ledit flux de gaz de carneau (7) en aval de l'ensemble turbine (1) est détectée par des moyens de détection et la quantité d'eau et/ou de vapeur injectée dans ledit flux d'écoulement de gaz en amont du dispositif de combustion (5) et/ou dans ce dernier est commandée par lesdits moyens de commande en réponse à une valeur de teneur en oxygène détectée.
